# EUROPÄISCHE PATENTANMELDUNG

(11) **EP 2 813 140 A1**
(43) Veröffentlichungstag der Anmeldung: **17.12.2014**
(21) Anmeldenummer: 14002005.8
(22) Anmeldetag: 11.06.2014
(51) Int. Cl.: A01G 25/14, E03B 3/03

(54) **Vorrichtung zum Befüllen von Gießkannen**

(30) Priorität: 12.06.2013 DE 102013009795
(71) Anmelder: Krüger, Stephan, 26133 Oldenburg (DE)
(72) Erfinder: Krüger, Helmut, 29468 Bergen/Dumme (DE)
(74) Vertreter: Heiland, Karsten

(57) **Zusammenfassung**

Die Erfindung betrifft eine Vorrichtung zum Befüllen von Gießkannen (16), mit einem Behälter (10) zur Aufnahme von Flüssigkeit, wobei dem Behälter (10) ein verschließbarer Auslass und ein insbesondere verschließbarer Einlass zugeordnet sind. Dabei kann ein wirksamer Querschnitt des Auslasses größer sein als ein wirksamer Querschnitt des Einlasses.

## Beschreibung

Die Erfindung betrifft eine Vorrichtung zum Befüllen von Gießkannen.

Typische Gießkannen zur Verwendung im Garten weisen oberseitig eine große Öffnung zum Befüllen und einen Griff auf, welcher sich bogenförmig über der Öffnung erstreckt. Das Befüllen der Gießkanne aus einem Wasserhahn oder mittels eines Gartenschlauchs ist zeitraubend und/oder mühsam.

Aufgabe der Erfindung ist die Schaffung einer Vorrichtung zum schnelleren oder einfacheren Befüllen von Gießkannen.

Die erfindungsgemäße Vorrichtung weist die Merkmale des Anspruchs 1 auf. Bestandteil der Vorrichtung ist ein Behälter zur Aufnahme von Flüssigkeit, wobei dem Behälter ein verschließbarer Auslass und ein insbesondere verschließbarer Einlass zugeordnet sind. Über den Einlass kann der Behälter auch in Abwesenheit einer Gießkanne befüllt werden. Der Auslass kann so dimensioniert sein, dass ein schnelles Befüllen der Gießkanne möglich ist. Ein weit verbreiteter Gießkannentyp weist ein Volumen von etwa 10 Litern auf. Eine komplette Befüllung kann mit einem ausreichend großen Auslass in etwa 10 Sekunden oder weniger Zeit erfolgen. Der Volumenstrom liegt dann bei 1 Liter pro Sekunde oder mehr. Die Befüllung erfolgt drucklos, das heißt auf der Flüssigkeitssäule im Behälter lastet lediglich Atmosphärendruck, kein Überdruck.

Nach einem weiteren Gedanken der Erfindung ist ein wirksamer Querschnitt des Auslasses größer als ein wirksamer Querschnitt des Einlasses, insbesondere mindestens viermal so groß. Vorzugsweise ist der Auslass zehnmal so groß wie der Einlass oder größer. Eine befüllte Gießkanne wird im Garten langsam geleert, während das Wasser in den Behälter strömt. Ist die Gießkanne leer, kann sie aus dem Behälter in sehr kurzer Zeit wieder befüllt werden.

Erfindungsgemäß kann dem Einlass ein Verschluss zugeordnet sein, welcher den Einlass selbsttätig verschließt, sobald die Flüssigkeit im Behälter einen oberen Flüssigkeitspegel erreicht hat oder eine definierte Flüssigkeitsmenge in den Behälter geströmt ist. Dadurch ist es möglich, den Behälter an eine stets offene Wasserleitung anzuschließen, ohne dass der Behälter überläuft.

Vorteilhafterweise ist der Verschluss für den Einlass durch einen Schwimmer im Behälter betätigbar. Das Prinzip für einen durch einen Schwimmer gesteuerten Verschluss einer Wasserleitung ist aus Wasserspülkästen für Toiletten bekannt und muss nicht näher erläutert werden.

Erfindungsgemäß kann dem Einlass ein Anschluss für eine Wasserleitung oder einen Gartenschlauch zugeordnet sein, insbesondere eine Steckkupplung, vorzugsweise für eine ½"- oder ¾"-Kupplung. Es handelt sich dabei um handelsübliche Kupplungsgrößen von Gartenschläuchen. Natürlich können auch andere Größen verwendet werden.

Alternativ kann der Einlass unmittelbar oder über eine Leitung/einen Schlauch an ein Fallrohr zur Dachentwässerung (Regenrinne) angeschlossen sein. Dabei ist auch ein Betrieb ohne Schwimmer möglich, da der Anschluss drucklos ist. Schließlich kann der Anschluss ans Fallrohr auch zusätzlich zum Anschluss für einen Gartenschlauch oder eine andere Wasserleitung vorgesehen sein.

Nach einem weiteren Gedanken der Erfindung kann dem Auslass ein manuell bedienbarer Verschluss zugeordnet sein, welcher nur zum Öffnen betätigt werden muss und selbsttätig wieder schließt, insbesondere nach Durchlauf einer definierten Flüssigkeitsmenge, bei entleertem Behälter oder nach Ablauf einer definierten Zeit. Das Prinzip des manuellen Öffnens und automatischen Schließens ist ebenfalls von Wasserspülkästen in Toiletten bekannt. Die Bedienung ist dadurch besonders einfach. Vorzugsweise ist dem Auslass eine Heberglocke zugeordnet, welche eine Abschlussöffnung bzw. Behälteröffnung verschließt und zum Öffnen anhebbar ist. Das Anheben der Heberglocke kann manuell über ein Gestänge oder einen Seilzug erfolgen oder durch Druckänderung im Behälter oder auf andere Weise. Die Verwendung einer Heberglocke ist wiederum im Zusammenhang mit Wasserspülkästen für Toiletten bekannt.

Das Öffnen und Schließen des Auslasses kann auf unterschiedliche Art und Weise erfolgen, etwa manuell, pneumatisch, hydraulisch und/oder elektrisch. Vorzugsweise wird das Öffnen manuell durchgeführt, während das Schließen des Auslasses selbsttätig erfolgt nach Durchlauf einer definierten Flüssigkeitsmenge, bei entleertem Behälter oder nach Ablauf einer definierten Zeit. Zum Schließen und ggf. auch zum Öffnen kann auch ein elektrisch angesteuertes Ventil vorgesehen sein, insbesondere in Verbindung mit einer elektronischen Einheit zur Steuerung. In der elektronischen Einheit ist beispielsweise ein Zeitintervall hinterlegt. Das Zeitintervall beginnt mit Öffnen des Auslasses. Nach Ablauf des Zeitintervalls erhält das Ventil einen Impuls zum Schließen. Alternativ oder zusätzlich kann ein Durchflussmengenmesser vorgesehen sein. Nach Erreichen einer vorher definierten Durchflussmenge erhält das Ventil einen Impuls zum Schließen.

Erfindungsgemäß kann der Auslass einen Auslaufstutzen aufweisen, welcher gekrümmt ausgebildet ist, derart, dass eine freie Stutzenöffnung nicht in einer mittigen aufrechten Behälterebene unter dem Behälter liegt, sondern mit Abstand vor der aufrechten Behälterebene. Die Dimensionen Höhe und -Breite des Behälters definieren die aufrechte Behälterebene, die etwa mittig durch den Behälter verläuft. Dabei kann der Behälter eine relativ geringe Tiefe (Abmessung senkrecht zur aufrechten Behälterebene) aufweisen. Die Tiefe kann durch den gekrümmten Auslaufstutzen geringer sein als die korrespondierende Abmessung einer zu befüllenden Gießkanne. Der Auslaufstutzen ist vorzugsweise so angeordnet, dass die Gießkanne beim Befüllen zwar unterhalb des Behälters, aber schräg versetzt zu diesem stehen kann, also mit Abstand zur aufrechten Behälterebene. Dabei reicht der Auslaufstutzen zwischen die Öffnung der Gießkanne und dem bogenförmigen Griff derselben. Der Auslass ist vorteilhafterweise im Bereich einer tiefsten Stelle des Behälters vorgesehen, damit sich im Behälter keine Feststoffe ablagern können. Vorzugsweise ist der Auslass in einer Bodenwand des Behälters oder in einer Seitenwand des Behälters, nahe der Bodenwand angeordnet.

Nach einem weiteren Gedanken der Erfindung kann die Vorrichtung Befestigungsmittel zur Befestigung an einer Wand aufweisen. Im einfachsten Fall sind Löcher zum Einhängen in wandseitige Haken vorgesehen. Möglich sind aber auch höhenverstellbare Befestigungsmittel, etwa eine Schiene mit daran angeordneten, feststellbaren Reitern. Vorzugsweise sind dann die Reiter der Vorrichtung zugeordnet und die Schiene der Wand.

Erfindungsgemäß kann der Behälter als Standmodell ausgeführt sein oder es ist ein Halter für den Behälter vorgesehen sein, derart, dass eine Auslassöffnung des Behälters bzw. eine untere Behälteröffnung mit Abstand zum Boden angeordnet ist, insbesondere mit einem Abstand von etwa einem halben Meter. Der Halter kann als Ständer zum Aufstellen auf dem Boden oder zum Anlehnen und/oder Befestigen an einer Wand vorgesehen sein. Der Abstand zum Boden sollte so bemessen sein, dass eine für die Vorrichtung vorgesehene Gießkanne bequem unter der Auslassöffnung positioniert werden kann.

Vorteilhafterweise funktioniert der Behälter nach dem Prinzip des Toiletten-Spülkastens und ist entsprechend aufgebaut, insbesondere mit schwimmergesteuertem Einlass und schwallartigem Austritt des Wassers.

Gegenstand der Erfindung ist auch ein Ensemble aus einer Vorrichtung der genannten Art und einer Gießkanne, wobei die Gießkanne oberseitig eine Öffnung zum Befüllen aufweist, und wobei der Vorrichtung eine Halteeinrichtung zugeordnet ist, welche den Behälter in einer Höhe hält, so dass eine Auslassöffnung am Behälter bzw. eine untere Behälteröffnung oder eine Stutzenöffnung etwa im Bereich der Öffnung zum Befüllen der Gießkanne vorgesehen ist oder darüber. Ziel ist ein Abstand von höchstens 1 bis 2 Zentimetern. Die Gießkanne kann dann bequem unter der Auslassöffnung positioniert und nach dem Befüllen wieder fortbewegt werden. Spritzwasser tritt kaum auf.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine seitliche Draufsicht einer Vorrichtung zum Befüllen zusammen mit einer darunter stehenden Gießkanne,
- Fig. 2: die Vorrichtung gemäß Fig. 1 in Seitenansicht,
- Fig. 3: die Vorrichtung gemäß Fig. 1 in einer Ansicht von oben,
- Fig. 4: eine Vorrichtung zum Befüllen von Gießkannen in perspektivischer Darstellung,
- Fig. 5: die Vorrichtung gemäß Fig. 4 in seitlicher Draufsicht,
- Fig. 6: einen Querschnitt der Vorrichtung entlang der Linie VI-VI in Fig. 5,
- Fig. 7: eine weitere Ausführungsform der Vorrichtung in seitlicher Draufsicht,
- Fig. 8: einen Querschnitt der Vorrichtung entlang der Linie VIII-VIII in Fig. 7.

Eine Befüllvorrichtung für Gießkannen weist einen Behälter 10 zur Aufnahme von Wasser auf. Der Behälter 10 ist zur Befestigung an einer nicht gezeigten aufrechten Wand vorgesehen, etwa an einer Außenwand eines Hauses. Hierzu ist der Behälter 10 relativ flach ausgebildet, nämlich mit geringer Tiefe, im Verhältnis zu Höhe und Breite. Höhe und Breite spannen dabei eine aufrechte Behälterebene 11 auf, welche etwa mittig durch eine untere Behälteröffnung 12 verläuft.

Unten an die Behälteröffnung 12 schließt ein Auslaufstutzen 13 an, welcher mit einem Gewindeflansch 14 mit der Behälteröffnung 12 verbunden ist. Der Auslaufstutzen 13 ist gekröpft ausgebildet mit einer freien Stutzenöffnung als Auslassöffnung unterhalb der Behälteröffnung 12 und versetzt zur Behälterebene 11.

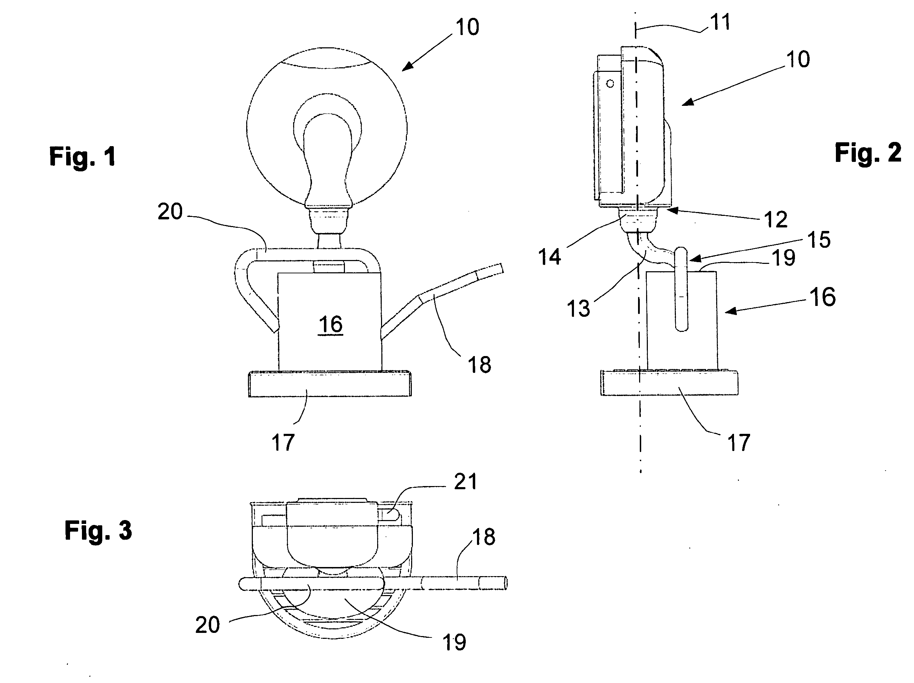

Unterhalb des Behälters 10 ist eine Gießkanne 16 auf einer Ablageplatte 17 positioniert. Die Gießkanne weist seitlich ein Ausgießerrohr 18 und über einer Oberseite 19 einen Handgriff 20 auf. Die Oberseite 19 ist mit einer in den Fig. nicht sichtbaren Öffnung unterhalb des Handgriffs 20 versehen. Die Gießkanne 16 ist auf der Ablageplatte 17 so positioniert, dass die Stutzenöffnung 15 genau in die Öffnung in der Oberseite 19 weist. Entsprechend steht die Gießkanne 16 nicht in der aufrechten Behälterebene 11, sondern davor, siehe insbesondere Fig. 2.

Der Behälter 10 weist in seinem oberen Bereich seitlich einen Anschluss 21, nämlich eine Steckkupplung zum Anschluss eines Gartenschlauchs auf. Im Inneren des Behälters 10 ist in nicht gezeigter Weise ein Verschluss für den als Einlauf fungierenden Anschluss 21 vorgesehen, insbesondere in Verbindung mit einem Schwimmer, so dass der Anschluss 21 selbsttätig schließt, sobald im Behälter 10 ein definierter Wasserstand erreicht ist.

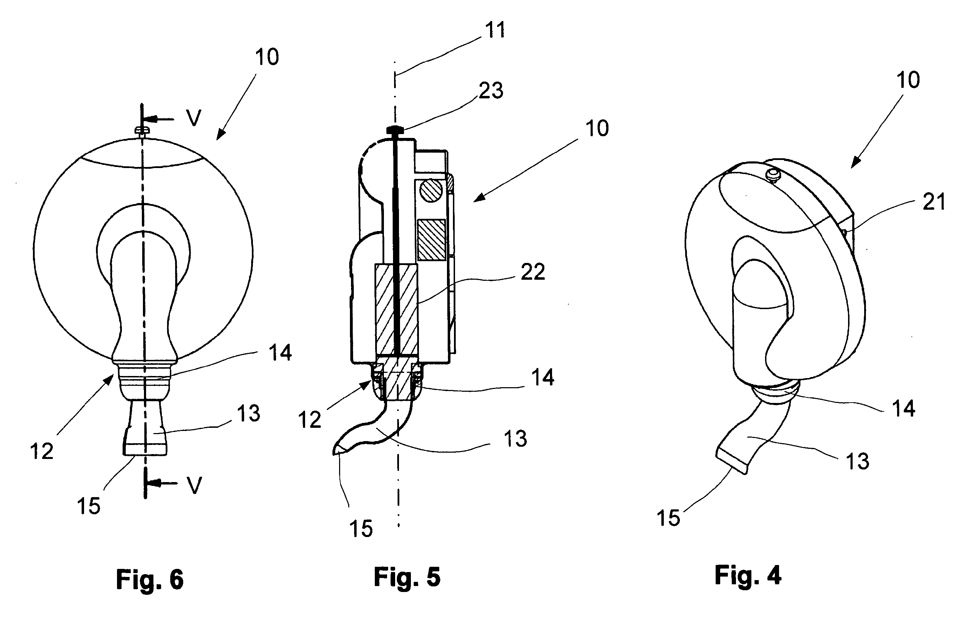

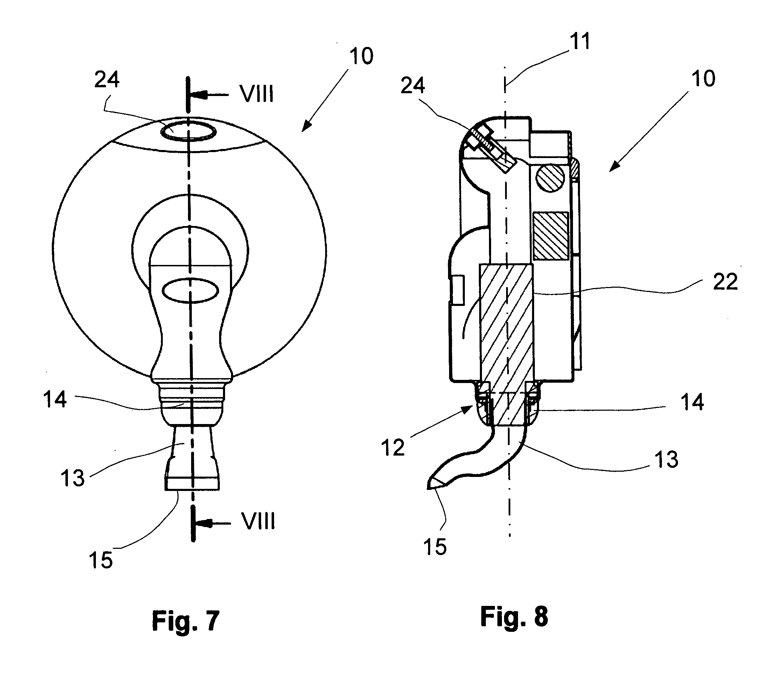

Die Befüllung der Gießkanne 16 erfolgt wie der Wasserzulauf bei einem Toiletten-Spülkasten. Der Behälter 10 wird relativ langsam aus einem Gartenschlauch befüllt. Durch den selbsttätigen Verschluss im Bereich des Anschlusses 21 kann der Gartenschlauch angeschlossen bleiben. Die Wasserzufuhr muss nicht abgedreht werden. Zum Ablassen des Wassers aus dem Behälter 10 sind in den Fig. zwei Varianten gezeigt, nämlich Fig. 4 bis 6 einerseits und 7 bis 8 andererseits. In beiden Varianten ist die untere Behälteröffnung von einer Heberglocke 22 verschlossen und zum Ablassen des Wassers muss die Heberglocke 22 angehoben werden. Gemäß den Fig. 4 bis 6 ist hierfür ein Gestänge mit Zughebel 23 vorgesehen. Fig. 8 zeigt demgegenüber einen Druckknopf 24, mit dem kurzzeitig eine Druckänderung im Behälter 10 erzeugt wird, so dass die Heberglocke 22 dadurch kurzzeitig angehoben oder auf andere Weise ein gespeichertes Wasservolumen abgegeben wird.

Durch den Zughebel 23 oder den Druckknopf 24 wird die untere Behälteröffnung 12 geöffnet und der Behälterinhalt kann sich in einem Schwall durch den Auslaufstutzen 13 in die Gießkanne 16 ergießen. Die Querschnitte von Auslaufstutzen 13 und Behälteröffnung 12 sind im Verhältnis zum Anschluss 21 relativ groß dimensioniert, so dass ungefähr 0,5 bis 2 Liter pro Sekunde Wasser ausströmen können, bei größeren Querschnitten auch mehr. Bei einem Behälterinhalt von 8 bis 10 Litern kann eine übliche 10-Liter-Gießkanne beispielsweise innerhalb von 10 Sekunden mit einem Schwall Wasser befüllt werden.

### Bezugszeichenliste:

- 10: Behälter
- 11: aufrechte Behälterebene
- 12: untere Behälteröffnung
- 13: Auslaufstutzen
- 14: Gewindeflansch
- 15: Stutzenöffnung
- 16: Gießkanne
- 17: Ablageplatte
- 18: Ausgießerrohr
- 19: Oberseite
- 20: Handgriff
- 21: Anschluss
- 22: Heberglocke
- 23: Zughebel
- 24: Druckknopf

## Patentansprüche

1. Vorrichtung zum Befüllen von Gießkannen, mit einem Behälter (10) zur Aufnahme von Flüssigkeit, wobei dem Behälter (10) ein verschließbarer Auslass und ein insbesondere verschließbarer Einlass zugeordnet sind.

2. Vorrichtung nach Anspruch 1, **dadurch gekennzeichnet, dass** ein wirksamer Querschnitt des Auslasses größer ist als ein wirksamer Querschnitt des Einlasses, insbesondere mindestens viermal so groß.

3. Vorrichtung nach Anspruch 1 oder 2, **dadurch gekennzeichnet, dass** dem Einlass ein Verschluss zugeordnet ist, welcher den Einlass selbsttätig verschließt, sobald die Flüssigkeit im Behälter einen oberen Flüssigkeitspegel erreicht hat oder eine definierte Flüssigkeitsmenge in den Behälter geströmt ist.

4. Vorrichtung nach Anspruch 3, **dadurch gekennzeichnet, dass** der Verschluss für den Einlass durch einen Schwimmer im Behälter betätigbar ist.

5. Vorrichtung nach Anspruch 1 oder einem der weiteren Ansprüche, **dadurch gekennzeichnet, dass** dem Einlass ein Anschluss (21) für eine Wasserleitung oder einen Gartenschlauch zugeordnet ist, insbesondere eine Steckkupplung, vorzugsweise für eine ½"- oder ¾"-Kupplung.

6. Vorrichtung nach Anspruch 1 oder einem der weiteren Ansprüche, **dadurch gekennzeichnet, dass** dem Auslass ein manuell bedienbarer Verschluss zugeordnet ist, welcher nur zum Öffnen betätigt werden muss und selbsttätig wieder schließt, insbesondere nach Austritt einer definierten Flüssigkeitsmenge, bei entleertem Behälter oder nach Ablauf einer definierten Zeit.

7. Vorrichtung nach Anspruch 1 oder einem der weiteren Ansprüche, **dadurch gekennzeichnet, dass** dem Auslass eine Heberglocke (22) zugeordnet ist, welche eine Abschlussöffnung bzw. Behälteröffnung (12) verschließt und zum Öffnen anhebbar ist.

8. Vorrichtung nach Anspruch 1 oder einem der weiteren Ansprüche, **dadurch gekennzeichnet, dass** der Auslass einen Auslaufstutzen (13) aufweist, welcher gekrümmt ausgebildet ist, derart, dass eine freie Stutzenöffnung (15) nicht in einer aufrechten Behälterebene (11) unter dem Behälter (10) liegt, sondern mit Abstand vor der aufrechten Behälterebene (11).

9. Vorrichtung nach Anspruch 1 oder einem der weiteren Ansprüche, **gekennzeichnet durch** Befestigungsmittel zur Befestigung an einer Wand.

10. Vorrichtung nach Anspruch 1 oder einem der weiteren Ansprüche, **dadurch gekennzeichnet, dass** der Behälter als Standmodell ausgeführt ist oder dass ein Halter für den Behälter (10) vorgesehen ist, derart, dass eine Auslassöffnung bzw. untere Behälteröffnung (12) oder Stutzenöffnung (15) mit Abstand zum Boden angeordnet sind, insbesondere mit einem Abstand von etwa einem ½ Meter.

11. Vorrichtung nach Anspruch 1 oder einem der weiteren Ansprüche, **dadurch gekennzeichnet, dass** der Behälter (10) nach dem Prinzip eines Toiletten-Spülkastens funktioniert und/oder aufgebaut ist.

12. Ensemble aus einer Vorrichtung nach einem der voranstehenden Ansprüche und einer Gießkanne (16), wobei die Gießkanne (16) oberseitig eine Öffnung zum Befüllen aufweist und wobei der Vorrichtung eine Halteeinrichtung zugeordnet ist, welche den Behälter (10) in einer Höhe hält, so dass eine Auslassöffnung am Behälter (10) bzw. eine untere Behälteröffnung (12) oder eine Stutzenöffnung (15) etwa im Bereich der Öffnung zum Befüllen der Gießkanne (16) vorgesehen sind oder darüber.
